Europäisches Patentamt

European Patent Office

Office européen des brevets

(19)

(11) **EP 1 133 526 B1**

(12) **FASCICULE DE BREVET EUROPEEN**

(45) Date de publication et mention
de la délivrance du brevet:
**16.11.2005 Bulletin 2005/46**

(21) Numéro de dépôt: **98955719.4**

(22) Date de dépôt: **23.11.1998**

(51) Int Cl.[7]: **C08F 8/32**, C09K 7/06

(86) Numéro de dépôt international:
**PCT/FR1998/002497**

(87) Numéro de publication internationale:
**WO 2000/031154 (02.06.2000 Gazette 2000/22)**

(54) **EMULSIONS INVERSABLES STABILISEES PAR DES POLYMERES AMPHIPHILES. APPLICATION A DES FLUIDES DE FORAGE**

AMPHIPHILE POLYMERE STABILISIERTE INVERT-EMULSIONEN UND VERWENDUNG ZU BOHRFLÜSSIGKEITEN

INVERTIBLE EMULSIONS STABILISED BY AMPHIPHILIC POLYMERS AND APPLICATION TO BORE FLUIDS

(84) Etats contractants désignés:
**AT BE CH CY DE DK ES FI FR GB GR IE IT LI LU MC NL PT SE**
Etats d'extension désignés:
**AL LT LV MK RO SI**

(43) Date de publication de la demande:
**19.09.2001 Bulletin 2001/38**

(73) Titulaires:
• **M-I L.L.C.**
**Houston, TX 77072 (US)**
Etats contractants désignés:
**AT BE CH CY DE DK ES FI GB GR IE IT LI LU MC NL PT SE**
• **COMPAGNIE DES SERVICES DOWELL SCHLUMBERGER**
**92541 Montrouge Cédex (FR)**
Etats contractants désignés:
**FR**

(72) Inventeurs:
• **MONFREUX, Nathalie**
**75005 Paris (FR)**
• **PERRIN, Patrick**
**75005 Paris (FR)**
• **LAFUMA, Françoise**
**75005 Paris (FR)**
• **SAWDON, Christopher**
**Biscovey Par PL24 2HJ (GB)**

(74) Mandataire: **Bongiovanni, Simone et al**
**Studio Torta S.r.l**
**Via Viotti 9**
**10121 Torino (IT)**

(56) Documents cités:
**EP-A- 0 191 980**         **FR-A- 2 693 202**
**US-A- 4 602 067**         **US-A- 4 675 359**
**US-A- 5 135 909**         **US-A- 5 208 216**

EP 1 133 526 B1

**Description**

La présente invention a pour objet la stabilisation d'émulsions par des polymères amphiphiles. Elle s'applique notamment à la préparation d'émulsions stables capables d'être inversées à la demande de façon à permettre la séparation et la récupération des liquides non miscibles. L'invention a également pour objet des fluides utilisés pour le forage, la complétion ou la simulation de puits d'hydrocarbures, géothermiques ou analogues.

Une émulsion est un exemple de système colloïdal formé de deux liquides non miscibles, l'un étant finement dispersé sous forme de gouttelettes dans l'autre. Généralement, une émulsion préparée par simple agitation des deux liquides n'est pas stable de sorte qu'un agent émulsifiant doit être ajouté pour faciliter l'émulsion et la stabiliser.

Pour certaines applications, il est souhaitable de disposer d'émulsions stables sur une longue durée, mais capables d'être déstabilisées simplement. Tel est notamment le cas avec les boues de forage utilisées lors de la construction des puits d'hydrocarbures ou analogues. Les boues de forage assurent plusieurs fonctions fondamentales lors de la construction d'un puits parmi lesquelles la lubrification et le refroidissement de l'outil de forage, le contrôle de la pression hydrostatique dans le puits pour contrebalancer la pression des formations traversées et l'évacuation vers la surface des déblais de forage.

Les boues de forage sont classées selon trois grandes catégories en fonction de la nature de leur phase continue :

- les boues dites à l'eau, avec une phase continue essentiellement formée d'eau mais qui peut contenir éventuellement des additifs tels que de l'huile émulsionnée, des sels et des polymères hydrosolubles,
- les boues à l'huile, dont la phase continue est essentiellement constituée d'huile, avec au plus de 1 à 15% d'eau dispersée et
- les boues eau dans l'huile, émulsions inverses qui peuvent contenir jusqu'à 60% d'eau.

Les boues de forage comportent également des solides comme par exemple des argiles ajoutées délibérément pour contrôler la densité de la boue et son pouvoir suspensif, ou provenant de la formation forée.

Les boues de type émulsion inverse ont de multiples avantages mais ceux-ci sont de plus en plus souvent mis en balance avec les problèmes environnementaux, notamment pour les forages en mer. La boue elle même est toujours recyclée mais il faut se débarrasser des déblais après les avoir séparés en surface par des moyens de séparation mécaniques des solides. Dans le cas des réglementations les plus strictes, le rejet en mer des déblais n'est autorisé que si ceux-ci contiennent moins de 1% de produits organiques, teneur qui est largement dépassée avec les boues de type émulsion inverse en raison du film de boue qui souille les déblais et qui ne peut être éliminé par les moyens mécaniques utilisés.

Il a été proposé de 'laver' les déblais avant de les rejeter en mer. Toutefois, les agents tensioactifs ajoutés pour stabiliser l'émulsion inverse s'avèrent si efficaces que l'eau de lavage est elle-même émulsionnée dans la boue, de sorte que l'huile est très peu dispersée dans l'eau de lavage alors que le volume de boue augmente, ainsi que sa viscosité. L'ajout de détergents pour déstabiliser ces émulsions inverses s'est également avéré largement inefficace. Par ailleurs, ces détergents posent eux-mêmes des problèmes environnementaux.

GB-2,309,240 décrit des émulsions eau dans huile qui sont inversées lorsque l'on diminue la salinité de la phase aqueuse par la simple addition d'eau fraîche ou même d'eau de mer. Cette propriété remarquable est obtenue en utilisant comme agent émulsionnant des combinaisons de tensioactifs non-ioniques du type éthoxylates et de tensioactifs anioniques sulfonates. Mais ces combinaisons de tensioactifs ne permettent pas l'obtention simultanée de toutes les propriétés souhaitées, à savoir principalement conférer une grande stabilité à l'émulsion, y compris aux températures élevées, avec des additifs faiblement toxiques et biodégradables.

Récemment, quelques auteurs ont proposé d'utiliser comme agent émulsifiant des polymères amphiphiles. Dans la plupart des cas, les travaux ont porté sur des copolymères à greffons polyoxyéthylènes et ont montré que la stabilité de l'émulsion directe (huile dans l'eau) augmente avec la proportion de greffons et avec leur longueurs. R.Y. Lochhead, notamment dans ACS Symp. Seris, 462, 101, 1991 et dans d'autres articles publiés avec ses collaborateurs a par ailleurs décrit des polyacrylates modifiés hydrophobes, avec pour squelette hydrophile un acide polyacrylique réticulé de masse élevée modifié à moins de 1% en moles par des alkylméthacrylates ou des alkylacrylates de longues chaînes ou encore avec une proportion non définie de résidus hydrophobes Carbopol. Les émulsions obtenues avec de fortes concentrations de ces polyacrylates modifiés hydrophobes sont déstabilisées par ajout d'électrolyte. Il subsiste le besoin de polymères bien définis capables de stabiliser des émulsions.

La présente invention a pour objet des polyélectrolytes modifiés hydrophobes par amidification d'un squelette hydrophile par des di-n-alkylamines dont les chaînes alkyl comportent de 6 à 22 atomes de carbone. De façon préférée, l'amidification est obtenue par de la di-n-dodécylamine $HN-(C_{12}H_{25})2$.

La proportion d'alkylamines introduite dans le squelette hydrophile doit être telle que le polymère modifié est substantiellement insoluble dans l'eau pure. De façon préférée, elle est comprise entre 0,10 et 0,50 mole de di-n-alkylamine par mole de polymère hydrophile.

Le squelette hydrophile est de préférence un polyacrylate de sodium de masse molaire variée, de préférence la masse moléculaire moyenne en poids est comprise entre 50.000 et 2.000.000 et de préférence encore entre 100.000 et 1.500.000.- ou l'acide polyacrylique correspondant - ou un copolymère statistique d'acrylate et acide 2-acrylamido-2-méthyl propane sulfonique (AMPS) de composition variable. De préférence, le copolymère statistique comporte entre 0,3 et 0,7 moles d'AMPS par mole d'acrylate.

Plus généralement, le polymère hydrophile est un homopolymère ou un copolymère à base de monomères choisis parmi notamment polymère comportant un ou plusieurs co-monomères choisis parmi notamment parmi l'acide acrylique, l'acide méthacrylique ou tout autre dérivé alkyl substitué en $\beta$ de l'acide acrylique ou des esters de ces acides obtenus avec des mono ou polyalkyleneglycols , l'acrylamide, le méthacrylamide, la vinylpyrrolidone, l'acide itaconique, l'acide maléique, le 2-acrylamido 2-méthyle propane sulfonate (AMPS), l'acide styrene-4-sulfonique ou l'acide vinylsulfonique.

Les polymères contenant des groupes acides carboxylates ou sulphonates peuvent être pour tout ou partie neutralisés par des bases organiques ou des hydroxydes de métaux et sont alors utilisés sous la forme de sels d'un métal alcalin ou alcalino-terreux.

L'invention a également pour objet des émulsions stabilisées par les polymères modifiés selon l'invention, comme par exemple des peintures. Selon le degré de modification et les monomères de départ, les polymères selon l'invention sont effectifs comme stabilisants d'émulsion directe ou inverse, l'émulsion pouvant être déstabilisée ou inversée par une réduction de la salinité de la phase aqueuse ou une neutralisation de l'acide. Ce phénomène est avantageusement mis à profit dans des fluides utilisés pour les forages pétroliers ou analogues, en particulier les fluides de forage, de fracturation, d'acidification ou de complétion. La déstabilisation de l'émulsion inverse (ou son inversion) est obtenue par exemple en ajoutant de l'eau fraîche ou du moins une eau peu salée (à la limite de l'eau de mer), de la soude caustique, de la potasse, du carbonate de sodium ou de potassium ou des sels de sodium ou de potassium, de complexants tels que des polyphosphates, des citrates, de l'acide éthylène diamine tétraacétique EDTA ou du nitrilotriacétate de sodium (NTA). La déstabilisation de l'émulsion permet de récupérer la phase organique (huile) pour la recycler et d'éliminer les déchets minéraux, tels que les débris de forage, qui ne sont plus alors mouillés par l'huile.

L'invention est plus précisément décrite à l'aide des exemples suivants qui illustrent des voies de synthèses de polymères selon l'invention et leurs propriétés stabilisatrices d'émulsions.

## I - SYNTHESE DES POLYACRYLATES MODIFIES HYDROPHOBES

### a) Acides Polyacryliques précurseurs

Deux polymères commerciaux, fournis par Polysciences et Scientific Polymer Products Inc. ont été utilisés, notés P et PP pour le dérivé de masse moléculaire plus élevée. PP est fourni sous forme solide. P, commercialisé en solution aqueuse est dilué à 10% puis lyophilisé. Les deux composés sont par la suite utilisés sous forme solide.

Leurs analyses sous forme basique par chromatographie par exclusion de taille en solution aqueuse sont reportées dans le tableau suivant :

| Type de polymères: | P | PP |
|---|---|---|
| masse molaire au pic (g/mol) | 46000 | 700000 |
| masse molaire moyenne en nombre (g/mol) | 42000 | 74000. |
| masse molaire moyenne en poids (g/mol) | 125000 | 1260000 |
| indice de polydispersité | 3 | 17 |

Les deux polymères ont des distributions très larges mais on peut néanmoins estimer que le degré de polymérisation en poids du polymère PP est 10 fois celui de P.

Par la suite, nous noterons PX le dérivé obtenu lorsque X% en moles de didodécylamine sont introduits pour le greffage du polyacrylate P, et PPX pour le dérivé du polyacrylate PP. Les dérivés sont dits moyennement greffés si X est supérieur à 5 et inférieur à 40 et fortement greffés pour X supérieur ou égal à 40.

### b) Synthèse des dérivés moyennement greffés.

La réaction des amines avec les acides carboxyliques dans un solvant aprotique; la N-méthyl-2-pyrrolidone NMP, en présence de dicyclohexylcarbodiimide (DCC) comme agent de couplage, est utilisée pour la modification de l'acide polyacrylique. La consommation de DCC conduit à la formation de dicyclohexylurée - DCU.

Exemple de mode opératoire : synthèse du polymère P30 :

2,27 g d'acide polyacrylique (0, 03 mole compte tenu dune teneur en eau de 5 % en poids) sont dissous dans 60 ml de NMP dans un bain thermostaté à 60 °C. Une première moitié des réactifs est ajoutée : 1,59 g (9. $10^{-3}$ mol) d'amine préalablement dissoute à chaud dans 13 ml de NMP, puis 1, 39 g (1, $35.10^{-2}$ mol) de DCC dissous dans 7 ml de NMP sont introduits goutte à goutte dans le ballon. Le milieu réactionnel est laissé sous agitation vive pendant 4 heures avant l'introduction selon le même processus de la deuxième moitié des réactifs - amine et DCC. 24 heures environ après le début de la réaction, le ballon est refroidi dans un bain de glace. Les cristaux de DCU formés sont filtrés sur fritté n°4. Le filtrat est alors neutralisé sous agitation vive par ajout de 6 équivalents de soude 10M. Le mélange est laissé sous agitation 4 heures puis filtré sur fritté n°4. Le précipité est lavé avec 20 ml de NMP chaude puis deux fois 50 ml de méthanol. Le polymère est purifié à l'aide d'un Soxhlet pourvu d'une cartouche de cellulose par extraction au méthanol chaud.

### c) Synthèse des dérivés fortement greffés.

On utilise une méthode semblable à la méthode utilisée pour les dérivés moyennement greffés mais en utilisant l'addition d'un équivalent de dicyclohexylcarbodiimide (DCC) et d'un équivalent de 1-hydrobenzotriazole (HOBT) - par rapport à l'amine - pour augmenter le rendement de la réaction d'amidification

Exemple de mode opératoire : synthèse des polymères P40 et P'40 :

5,25 g (0, 07 mol, compte tenu de 5 % d'eau dans le polymère) d'acide polyacrylique sont dissous dans 150 ml de NMP, et laissés sous agitation 12 heures à 60°C. 4,96 g (0,028 mol) de di-n-dodécylamine (didodécylamine), 1, 89 g (0, 028 mol) de (HOBT) puis 2,88g (0,028 mol) de DCC sont introduits successivement après dissolution préalable dans la NMP chaude. La seconde partie des réactifs est ajoutée de la même manière quatre heures plus tard: 4,96 g (0,028 mol) de didodécylamine, 1,89 g (0, 028 mol) de HOBT puis 2,88g (0, 028 mol) de DCC sont introduits successivement après dissolution préalable dans la NMP chaude. La température est maintenue à 60 'C pendant 24 heures après la première introduction de réactifs. Le milieu réactionnel est alors refroidi à 0 °C, et les cristaux de dicyclohexylurée formés sont filtrés sur fritté n°4. Le polymère modifié est ensuite précipité par neutralisation : 6 équivalents de soude 10 M ajoutés goutte à goutte au filtrat. Après environ 12 heures d'agitation, la suspension obtenue est filtrée sur fritté n°4, et le polymère est lavé avec du méthanol puis séché sous vide à température ambiante à l'aide d'une pompe à palettes. La suspension aqueuse de polymère à 10 % est dialysée avec une membrane dont le seuil de coupure est de 12000 g/mol dans une solution aqueuse de soude stabilisée à pH 9. Après plusieurs jours de dialyse, lorsque le pH du milieu est stable, la suspension est concentrée et lyophilisée.

Pour les dérivés les plus hydrophobes (X>40), un premier filtrat dans la NMP est récupéré et traité classiquement. Cette fraction du polymère correspond au polymère PX, une seconde fraction du polymère est récupérée par précipitation partielle avec la dicyclohexylurée. Les deux composés sont alors séparés par lavages successifs à l'éther éthylique. La solution de polymère dans l'éther est alors concentrée et reprise dans la NMP Cette deuxième fraction, notée P'X est alors traitée comme la première.

### d) Acidification des dérivés greffés

Les dérivés obtenus sous forme basique sont passés sous forme acide. Le polymère réduit en poudre est versé dans une solution d'acide chlorhydrique 0,1M. Après 12 heures sous agitation vive, la solution est filtrée. Le précipité est lavé à l'eau pure puis séché sous vide à température ambiante.

Par la suite, nous noterons de la même façon, les polyacrylates greffés et les acides polyacryliques greffés, étant entendu que les polyacrylates testés sont des sels de sodium

### e) Analyse des polyacrylates greffés

Chaque composé a été soumis à une analyse élémentaire pour déterminer les pourcentages respectifs en C, H, N et Na. Les rapports $\frac{\%C}{\%Na}$ et $\frac{\%N}{\%Na}$ permettent de déduire X.

Les résultats sont résumés au tableau suivant :

| nom du polymère | P6 | P15 | P25 | P30 | P40 | P50 | P'50 | PP50 |
|---|---|---|---|---|---|---|---|---|
| taux de greffage (%) | 3 | 12 | 22 | 30 | 35 | 51 | 48 | 47 |
| pourcentage d'eau en poids | 20 | 15 | 8 | 9 | 9 | 10 | 10 | 10 |
| Analyse des acides polyacryliques modifiés | 99 | 100 | 99 | 94 | 89 | 63 | 61 | 75 |

### f) Viscosité en solution aqueuse

On a étudié la viscosité en 'solution' aqueuse des polyacrylates modifiés sur des solutions à 1% de polymère. Le polymère le moins greffé a un comportement de polymère hydrosoluble associatif : l'association des greffons alkyles dans des zones hydrophobes provoque une réticulation physique du milieu et une augmentation de viscosité nette par rapport au polyacrylate précurseur. Pour les polymères moyennement greffés (chaînons dialkyls à plus de 10%), non hydrosolubles, la viscosité relative dans l'eau est inférieur à celle du polyacrylate précurseur. Pour les polymères les plus greffés, fortement hydrophobes (P50, P'50 et PP50), la viscosité relative dans l'eau est proche de 1.

### II - SYNTHESE DE TERPOLYMERES AA-AMPS GREFFES.

La préparation de terpolymères à base de d'AMPS (acide 2-acrylamido 2-methyl propane sulfonique) s'effectue en deux étapes : la synthèse de copolymères d'acide acrylique et d'AMPS par voie radicalaire et la modification hydrophobe de ces copolymères. Dans les exemples qui suivent, les copolymérisations acide acrylique / AMPS sont réalisées avec un couple ammonium peroxodisulfate (APS) et tétraméthyléthylène diamine (TEMEDA) comme initiateur.

On note PAAMPS-y,nQ un copolymère obtenu avec y% de moles de monomère AMPS et synthétisé avec nQ mol. d'initiateur, 1 Q correspondant à $2.10^{-3}$ mol. d'APS et $10^{-3}$ mol. de TEMEDA.

Exemple de mode opératoire : synthèse de PA-AMPS-50, 1Q

A température ambiante, dans un ballon placé sous agitation magnétique et atmosphère inerte, on dissous dans 100 ml d'eau distillée désionisée 7,42 g ($3,58 \ 10^{-2}$ mol) d'AMPS, 2,58 g ($3,58 \ 10^{-2}$ mol) d'acide acrylique et 0,25 g ($2 \ 10^{-3}$ mol) d'APS. Le pH est ajusté à 9 par addition de soude. Après 30 minutes, on introduit 0,25 g ($10^{-3}$ mol) de TEMEDA. Après 4 heures, le polymère est précipité dans l'acétone et séché sous vide. Une solution aqueuse à 5% est préparée est filtrée sur une membrane dont le seuil de coupure est de 10000 g/mol. La solution dialysée est alors concentrée et une solution aqueuse du polymère ainsi obtenu est passé sous forme acide à l'aide d'une résine échangeuse d'ions. La solution récupérée en sortie de colonne est concentrée et lyophilisée.

Le greffage du polymère s'effectue en reprenant le même mode opératoire que dans le cas des polyacrylates modifiés hydrophobes. La forme acide des copolymères est solubilisée dans de la NMP puis un équivalent - par rapport à l'AMPS- de soude est ajouté avant de suivre la procédure habituelle de greffage. La réaction d'amidification est réalisée en présence d'un équivalent DCC et d'un équivalent HOBT par rapport à l'amine

Par la suite, les terpolymères AA-AMPS greffés sont notés C Z X où Z est le pourcentage d'unités AMPS en moles et X le pourcentage de didodécylamine, arrondi en moles de modification effective.

Le taux de modification effectif a été déterminé par spectroscopie RMN[13] C en fonction du nombre de moles X' de didodécylamine introduit pour le greffage. Compte tenu de l'imprécision des mesures, on choisit de désigner le polymère avec une valeur arrondie de X.

| Z | X' | RMN[13] C | Désignation du polymère |
|---|---|---|---|
| 40 | 5 | 4 | C-40-5 |
| 40 | 20 | 10 | C-40-10 |
| 40 | 60 | 40 | C-40-40 |
| 60 | 20 | 11 | C-60-10 |
| 60 | 40 | 20 | C-60-20 |
| 60 | 60 | 30 | C-60-30 |

## III - EMULSIONS STABILISEES PAR DES POLYMERES GREFFES SELON L'INVENTION

Des volumes de 10 ml d'émulsion ont été préparés en mélangeant une phase aqueuse [eau pure ou fortement saline avec 20% en masse de chlorure de sodium ou de calcium], une phase organique constituée par de l'1-hexadécène et 1% de polymère greffé. On note E4-H6 une émulsion préparée avec 4 ml d'eau salée et 6 ml de 1-hexadécène.

Il est connu que le type d'émulsion peut dépendre de l'ordre de mélange des composants. Aussi, a-t-on utilisé un protocole précis pour la préparation des émulsions : à température ambiante, 100 mg de polymère sont agités pendant 48 heures dans le volume d'hexadécène. Puis, le volume de la phase aqueuse est ajouté et le mélange est dispersé par agitation pendant 3 minutes à 24000 tours/minute.

### A - Emulsions de type eau pure - hexadécène

| Emulsion stabilisée par les polyacrylates greffés | | | | | | | | |
|---|---|---|---|---|---|---|---|---|
| P50 | EAU DANS | | | | | | | |
| P40 | HUILE | | | | | | | |
| P30 | | | | | HUILE | DANS | | |
| P25 | | | | | L'EAU | | | |
| P15 | | | | | | | | |
| | E1H9 | E2H8 | E3H7 | E4H6 | E5H5 | E6H4 | E7H3 | E8H2 | E9H1 |

| Emulsion stabilisée par les acides polyacryliques greffés | | | | | | | | |
|---|---|---|---|---|---|---|---|---|
| P50 | EAU DANS | | | | | | | |
| P40 | HUILE | | | | | | | |
| P30 | | | | | | | HUILE | DANS |
| P25 | | | | | | | L'EAU | |
| P15 | | | | | | | | |
| | E1H9 | E2H8 | E3H7 | E4H6 | E5H5 | E6H4 | E7H3 | E8H2 | E9H1 |

| Emulsion stabilisée par les terpolymères AA-AMPS greffés | | | | | | | | |
|---|---|---|---|---|---|---|---|---|
| C-40-40 | EAU DANS | | | | | | | |
| C-60-30 | HUILE | | | | | HUILE | DANS | |
| C-60-20 | | | | | | L'EAU | | |
| C-60-10 | | | | | | | | |
| | E1H9 | E2H8 | E3H7 | E4H6 | E5H5 | E6H4 | E7H3 | E8H2 | E9H1 |

Si le polymère n'est pas trop hydrophile (greffage inférieur à 30% pour les polymères chargés ; l'acidification des polyacrylates conduisant à une neutralisation des charges), on note que pour un polymère stabilisant donné, l'émulsion peut être inversée par changement de la fraction volumique.

A une fraction volumique donnée, l'émulsion peut être inversée par augmentation de l'hydrophobie du stabilisant, c'est à dire par augmentation du taux de greffage.

**B - Emulsions de type phase saline - hexadécène**

Pour ces tests et tous les suivants, on a choisi une composition 'neutre' avec un demi volume de solution aqueuse saline et un demi volume d'huile. Après 24 heures, on relève le pourcentage de volume émulsionné et l'aspect de l'émulsion. Lorsque les gouttes sont de l'ordre du millimètre, les émulsions sont dites translucides millimétriques ; des gouttes plus fines donnent des émulsions troubles ; enfin des gouttes de l'ordre du micromètre donnent une émulsion blanche.

| Emulsion stabilisée par les polyacrylates greffés | | | | | |
|---|---|---|---|---|---|
| | **Eau pure** | | **NaCl 20%** | | **CaCl$_2$ 20%** | |
| **P15** | 80% | H/E blanche | 70% | H/E translucide | 60% | E/H translucide |
| **P25** | 70% | H/E blanche | 60% | E/H translucide | 60% | E/H translucide |
| **P30** | 70% | H/E blanche | 60% | E/H translucide | 65% | E/H translucide |
| **P40** | 80% | H/E blanche | 55% | E/H trouble | 65% | E/H translucide |
| **P50** | 75% | E/H blanche | 75% | E/H blanche | 75% | E/H blanche |
| **P'50** | 70% | E/H blanche | 75% | E/H blanche | 75% | E/H blanche |
| **PP50** | 70% | E/H blanche | 60% | E/H blanche | 60% | E/H blanche |

| Emulsion stabilisée par les acides polyacryliques greffés | | | | | |
|---|---|---|---|---|---|
| | **Eau pure** | | **NaCl 20%** | | **CaCl$_2$ 20%** | |
| **P15** | 30% | E/H blanche | 65% | E/H translucide | 60% | E/H translucide |
| **P25** | 60% | E/H blanche | 70% | E/H translucide | 60% | E/H translucide |
| **P30** | 70% | E/H blanche | 70% | E/H trouble | 60% | E/H trouble |
| **P40** | 70% | E/H blanche | 70% | E/H blanche | 70% | E/H blanche |
| **P50** | 70% | E/H blanche | 70% | E/H blanche | 70% | E/H blanche |
| **P'50** | 70% | E/H blanche | 70% | E/H blanche | 70% | E/H blanche |
| **PP50** | 70% | E/H blanche | 70% | E/H blanche | 70% | E/H blanche |

| Emulsion stabilisée par les terpolymères AA-AMPS greffés | | | | |
|---|---|---|---|---|
| | **Eau pure** | | **NaCl 20%** | **CaCl$_2$ 20%** |
| C-60-10 | 80% | H/E blanche | Pas d'émulsion | |
| C-60-20 | 70% | H/E blanche | . Polymère précipité | |
| C-60-30 | 100% | H/E blanche | à l'interface | |
| C40-40 | 75% | H/E blanche | 60% E/H translucide | 60% E/H blanche |

## IV - TESTS COMPARATIFS

*Polymères précurseurs non greffés*

On a préparé des émulsions selon la même méthode que précédemment (composition 'neutre', polymère à 1%), à partir d'un polyacrylate de sodium P, non greffé et des copolymères AA-AMPS, avec respectivement 40% et 60% de mol. d'AMPS. L'aspect et le volume ont été relevés deux heures après la préparation.

| | **Eau pure** | **NaCl 20%** | **CaCl$_2$ 20%** |
|---|---|---|---|
| Polyacrylate de sodium | 5% huile, 60% émulsion blanche H/E, 35% eau | deux phases distinctes | deux phases distinctes |
| C-40 | deux phases distinctes | 5% huile, 85% émulsion blanche H/E, 10% eau | 25% huile, 40% émulsion blanche H/E, 35% eau |
| C-60 | deux phases distinctes | 5% huile, 90% émulsion blanche H/E, 5% eau | 10% huile, 60% émulsion blanche H/E, 30% eau |
| | | H/E, 5% eau | H/E, 30% eau |

Dans tous les cas, seule une émulsion directe peut être formée.

*Tensioactif*

Dans des conditions d'émulsification identiques, on a préparé des émulsions avec deux tensioactifs courants. Le monooléate de sorbitane est un tensioactif lipophile non ionique. L'AOT ou bis(2-éthylhexyl) sulfosuccinate de sodium est un tensioactif ionique hydrophile.

| | **Eau pure** | | **NaCl 20%** | | **CaCl$_2$ 20%** | |
|---|---|---|---|---|---|---|
| monooleate de sorbitane | 80% | E/H blanche | 80% | E/H blanche | 80% | E/H blanche |
| **AOT** | 75% | H/E blanche | deux phases limpides | | deux phases limpides | |

Pour le tensioactif non ionique, très fortement lipophile, seul le type E/H est obtenu quelle que soit la salinité de l'eau. Avec le tensioactif ionique hydrophile, une émulsion H/E est obtenue en eau pure. Lorsque du sel est ajouté, une émulsion inverse se forme mais extrêmement instable, les deux phases se séparant très rapidement.

## V - TOXICITE DES POLYMERES GREFFES SELON L'INVENTION

La plupart des tensioactifs connus utilisés pour la préparation des émulsions ont une toxicité importante ; les polymères selon l'invention étant peu solubles dans l'eau et d'un poids moléculaire élevé, on pouvait s'attendre à une faible toxicité. C'est ce qui a été vérifié en testant le polymère P50 (polyacrylate de sodium) selon la méthode dite d'inhibition de croissance d'une algue marine unicellulaire (Algae Skeletonema Costatum).
La concentration qui inhibe la croissance de 50% de la population d'algues après 72 heures est de plus de 10000mg/l avec le polymère P50. Pour de nombreux tensioactifs connus, cette même concentration critique est inférieur à 10 mg/l, montrant par là tout l'intérêt des polymères selon l'invention pour la préparation d'émulsions en milieu sensible.

## Revendications

1. Polymère modifié hydrophobe par amidification d'un squelette polymère hydrophile par une ou plusieurs di-n-alkyamines dont les chaînes alkyl comportent de 6 à 22 atomes de carbone.

2. Polymère selon la revendication 1, **caractérisé en que** la di-n-alkylmine est la di-n-dodécylamine.

3. Polymère selon la revendication 1, **caractérisé en que** le squelette polymère hydrophile est un homopolymère ou un copolymère à base de monomères choisis parmi notamment parmi l'acide acrylique, l'acide méthacrylique ou tout autre dérivé alkyl substitué en β de l'acide acrylique ou des esters de ces acides obtenus avec des mono ou polyalkyleneglycols, l'acrylamide, le méthacrylamide, la vinylpyrrolidone, l'acide itaconique, l'acide maléique, le 2-acrylamido 2-méthyle propane sulfonate (AMPS), l'acide styrène-4-sulfonique ou l'acide vinylsulfonique.

4. Polymère selon la revendication 3, **caractérisé en que** le squelette polymère hydrophile est un polyacrylate de sodium.

5. Polymère selon la revendication 4 **caractérisé en que** le polyacrylate de sodium a une masse molaire moyenne en poids comprise entre 50000 et 2000000 et de préférence entre 100000 et 1500000.

6. Polymère selon la revendication 4, **caractérisé en que** la squelette hydrophile est un copolymère statistique d'acrylate et d'acide 2-acrylamido-2-méthyl propane sulfonique (AMPS).

7. Polymère selon la revendication 6, **caractérisé en que** ledit copolymère statistique comporte entre 30 et 70% de moles d'AMPS par mole d'acrylate.

8. Polymère selon l'une quelconque des revendications précédentes **caractérisé en que** le taux de modification effectif du polymère est compris entre 0,10 et 0,50 mole de di-n-alkylamine par mole de polymère hydrophile.

9. Usage du polymère selon la revendication 1, à la stabilisation d'émulsions.

10. Usage du polymère selon la revendication 1, à la stabilisation de fluides de forages pétroliers ou analogues.

11. Usage selon la revendication 10, **caractérisé en que** ledit fluides de forages pétroliers ou analogues choisis parmi notamment parmi les fluides de forage, de fracturation, d'acidification ou de complétion.

12. Usage du polymère selon la revendication 1 en la formulation d'une émulsion stable des liquides non miscibles, **caractérisé en que** ladite émulsion stable est capable d'être inversée à la demande pour permettre la séparation des liquides non miscibles.

**Patentansprüche**

1. Polymer mit einem hydrophilen Polymergerüst, welches mittels Amidierung durch ein oder mehrere Di-n-alkylamine, deren Alkylketten 6 bis 22 Kohlenstoffatome enthalten, hydrophob gemacht ist.

2. Polymer nach Anspruch 1, **dadurch gekennzeichnet, dass** das Di-n-alkylamin das Di-n-dodecylamin ist.

3. Polymer nach Anspruch 1, **dadurch gekennzeichnet, dass** das hydrophile Polymergerüst ein Homopolymer oder ein Copolymer auf der Basis von Monomeren ist, die ausgewählt sind, insbesondere aus Acrylsäure, Methacrylsäure und allen anderen Alkylderivaten, die in der β-Stellung der Acrylsäure substituiert sind, oder den Estern dieser Säuren, die mit Mono- oder Polyalkylenglykolen erhalten werden, Acrylamid, Methacrylamid, Vinylpyrrolidon, Itaconsäure, Maleinsäure, 2-Acrylamido-2-methylpropansulfonat (AMPS), Styrol-4-sulfonsäure oder Vinylsulfonsäure.

4. Polymer nach Anspruch 3, **dadurch gekennzeichnet, dass** das hydrophile Polymergerüst ein Natriumpolyacrylat ist.

5. Polymer nach Anspruch 4, **dadurch gekennzeichnet, dass** das Natriumpolyacrylat eine gewichtsgemittelte Molekularmasse zwischen 50.000 und 2.000.000 aufweist, bevorzugt zwischen 100.000 und 1.500.000.

6. Polymer nach Anspruch 4, **dadurch gekennzeichnet, dass** das hydrophile Gerüst ein statistisches Copolymer von Acrylat und 2-Acrylamido-2-Methylpropansulfonsäure (AMPS) ist.

7. Polymer nach Anspruch 6, **dadurch gekennzeichnet, dass** das statistische Copolymer zwischen 30 und 70 Mol% an AMPS pro Mol an Acrylat enthält.

8. Polymer nach einem der voranstehenden Ansprüche, **dadurch gekennzeichnet, dass** der Grad der wirksamen Modifikation des Polymers zwischen 0,10 und 0,50 Mol an Di-n-alkylamin pro Mol an hydrophilem Polymer beträgt.

9. Verwendung eines Polymers nach Anspruch 1 zur Stabilisierung von Emulsionen.

10. Verwendung eines Polymers gemäß Anspruch 1 zur Stabilisierung von Fluiden bei der Erdölförderung oder dergleichen.

11. Verwendung nach Anspruch 10, **dadurch gekennzeichnet, dass** die genannten Fluide der Erdölförderung oder dergleichen ausgewählt sind, insbesondere unter den Fluiden der Bohrung, des Aufbrechens, der Ansäuerung oder der Komplettierung.

12. Verwendung eines Polymers gemäß Anspruch 1 bei der Formulierung einer stabilen Emulsion von nicht mischbaren Flüssigkeiten, **dadurch gekennzeichnet, dass** diese stabile Emulsion in der Lage ist, nach Bedarf zu demulgieren, um die Trennung der nicht mischbaren Flüssigkeiten zu ermöglichen.


**Claims**

1. Polymer hydrophobically modified by amidification of a hydrophilic polymer backbone by one or more di-n-alkylamines whose alkyl chains comprise 6 to 22 carbon atoms.

2. Polymer according to Claim 1, **characterised in that** the di-n-alkylamine is di-n-dodecylamine.

3. Polymer according to Claim 1, **characterised in that** the hydrophilic polymer backbone is a homopolymer or a copolymer based on monomers chosen from amongst in particular acrylic acid, methacrylic acid or any other beta-substituted alkyl derivative of acrylic acid or esters of these acids obtained with mono or polyalkylene glycols, acrylamide, methacrylamide, vinylpyrrolidone, itaconic acid, maleic acid, 2-acrylamido-2-methylpropanesulphonate (AMPS), 4-styrenesulphonic acid or vinylsulphonic acid.

4. Polymer according to Claim 3, **characterised in that** the hydrophilic polymer backbone is a sodium polyacrylate.

**5.** Polymer according to Claim 4, **characterised in that** the sodium polyacrylate has a weight-average molar mass between 50000 and 2000000 and preferably between 100000 and 1500000.

**6.** Polymer according to Claim 4, **characterised in that** the hydrophilic backbone is a statistical copolymer of acrylate and 2-acrylamido-2-methylpropanesulphonic acid (AMPS).

**7.** Polymer according to Claim 6, **characterised in that** the said statistical copolymer comprises between 30% and 70% moles of AMPS per mole of acrylate.

**8.** Polymer according to any one of the preceding claims, **characterised in that** the effective degree of modification of the polymer is between 0.10 and 0.50 moles of di-n-alkylamine per mole of hydrophilic polymer.

**9.** Use of the polymer according to Claim 1, for the stabilisation of emulsions.

**10.** Use of the polymer according to Claim 1, for the stabilisation of petroleum or similar drilling fluids.

**11.** Use according to Claim 10, **characterised in that** the said petroleum or similar drilling fluids are chosen from amongst in particular drilling, fracturing, acidifying or completion fluids.

**12.** Use of the polymer according to Claim 1 in the formulation of a stable emulsion of non-miscible liquids, **characterised in that** the said stable emulsion is capable of being inverted on demand to allow the separation of the non-miscible liquids.